# EUROPEAN PATENT APPLICATION

(11) **EP 4 575 705 A1**
(43) Date of publication of application: **25.06.2025**
(21) Application number: 23383342.5
(22) Date of filing: 21.12.2023
(51) Int. Cl.: G05G 5/03, G05G 1/44, G05G 1/42, B60T 7/04

(54) **FEEL SIMULATOR MODULE**

(71) Applicant: Batz, S.Coop., 48140 Igorre (ES)
(72) Inventor: CORRAL RODRIGUEZ, Pedro, 48903 BURCEÑA-BARAKALDO (ES); BURGUERA ALBIZURI, Fernando, 48014 BILBAO (ES)
(74) Representative: Igartua, Ismael

(57) **Abstract**

Feel simulator module comprising a fixed part (10) and a movable part (11) opposite and movably coupled to the fixed part (10), the movable part (11) being displaced relative to the fixed part (10) when a driver actuates an actuation device (71) of a vehicle. The feel simulator module (1) comprises elastic means (4) which generate a counterforce on the movable part (11) which opposes the driver's actuation on the actuation device (71), and contact means coupled to the elastic means (4) which move over at least one contact surface (12, 13) actuated by the elastic means (4) when the movable part (11) is displaced. One of the parts (10, 11) comprises said at least one contact surface (12, 13), the elastic means (4) being supported on the other of said parts (10, 11).

## Description

### TECHNICAL FIELD

The present invention relates to a feel simulator module configured to be arranged between an actuation device of a vehicle and a fixed portion of said vehicle, and to a vehicle incorporating said feel simulator module.

### PRIOR ART

Actuation devices for vehicles are known, in particular foot-operated actuation devices, such as a brake or clutch, which incorporate a system to adjust the force curve to be applied by the user when acting on the actuation device to predefined requirements.

EP2653946A1 relates to an assistance device for actuating a pedal of a motor vehicle. The pedal comprises a bracket and a pivotable arm coupled to the bracket. The assistance device comprises a profile on the arm, elastic means coupled to the bracket and rolling means acting on the profile actuated by the elastic means by exerting an additional force on the arm during the arm's travel between a rest position and an active position. The assistance device also comprises a lever which is pivotably attached to the support, the rolling means and the elastic means attached to one end of the lever.

### DISCLOSURE OF THE INVENTION

The object of the invention is to provide a feel simulator module configured to be arranged between an actuation device of a vehicle and a fixed portion of said vehicle, and a vehicle incorporating said feel simulator module, as defined in the claims.

A first aspect of the invention relates to a feel simulator module configured to be arranged between an actuation device of a vehicle and a fixed portion of said vehicle.

The feel simulator module comprises a fixed part which is configured to be coupled to the fixed portion of the vehicle, and a movable part which is configured to be coupled to the actuation device of the vehicle. The movable part is arranged opposite and movably coupled to the fixed part, the movable part being displaced relative to the fixed part when a driver actuates the actuation device of the vehicle.

The feel simulator module also comprises elastic means between the fixed part and the movable part. These elastic means deform when the driver acts on the vehicle actuation device, so that the elastic means generate a counterforce on the movable part which opposes the displacement of the movable part.

In addition, the feel simulator module comprises contact means coupled to the elastic means, the contact means moving over at least one contact surface actuated by the elastic means when the movable part is displaced, so that the counterforce exerted by the elastic means on the movable part changes according to the profile of the contact surface.

One of the parts, i.e. either the fixed part or the movable part, comprises such at least one contact surface, the elastic means being supported on the other of these parts.

The feel simulator module forms a unit which includes the necessary elements to provide an actuation device with the possibility of defining, point by point, the force to be applied by the driver to move the actuation device from the rest position to the maximum actuating position. For this purpose, it is sufficient to design the profile of the contact surface, i.e. the slope of the contact surface at each point, in order to obtain a counterforce of the elastic means to the conductor's actuation adapted to the desired requirements.

The fact that the feel simulator module includes all the elements necessary for its operation allows it to be coupled to different types of actuation devices, for example to a conventional pivoting pedal as well as to a push-button or organ-type pedal.

Furthermore, the feel simulator module of the invention also facilitates the assembly process as the various components of the feel simulator can be assembled separately from the actuation device, and subsequently attached to the actuation device on the one hand and to the fixed portion of the vehicle on the other hand.

A second aspect of the invention relates to a vehicle comprising an actuation device and a feel simulator module as described in the first aspect of the invention, the actuation device being an electronic braking device.

These and other advantages and features of the invention will become apparent in view of the figures and the detailed description of the invention.

### DESCRIPTION OF THE DRAWINGS

Figure 1 shows a view of a feel simulator module according to a first embodiment of the invention, the feel simulator module being in the rest position.
Figure 2 shows a second view of the feel simulator module of figure 1, with the feel simulator module in maximum actuation position.
Figure 3 shows a partial perspective view of the feel simulator module of figure 1.
Figure 4 shows an exploded view of the feel simulator module of figure 1.
Figure 5 shows the feel simulator module of figure 1 coupled to a vehicle actuation device, the actuation device being part of a push-button type pedal.
Figure 6 shows the feel simulator module of figure 1 coupled to a push-button type pedal.
Figure 7 shows a view of a feel simulator module according to a second embodiment of the invention, the feel simulator module being in the rest position.
Figure 8 shows a second view of the feel simulator module in figure 7, with the feel simulator module in the maximum actuated position.
Figure 9 shows a partial perspective view of the feel simulator of figure 7, with the feel simulator module in the rest position.
Figure 10 shows a second partial perspective view of the feel simulator module of figure 7, with the feel simulator module in the maximum actuated position.
Figure 11 shows a partial perspective view of the fixed part of the feel simulator module of figure 7.
Figure 12 shows a partial perspective view of the movable part and the elastic means of the feel simulator module of figure 7.
Figure 13 shows in detail the first spring of the elastic means of the feel simulator module of figure 7, together with the support and the connecting rod associated with the first spring.
Figure 14 shows an exploded view of the feel simulator module of figure 7.
Figure 15 shows the feel simulator module of figure 7 coupled to an actuation device and a fixed portion of a vehicle, the actuation device being part of a conventional pedal, the actuation device being in the rest position.
Figure 16 shows a first section view of figure 15, with the actuation device in the rest position.
Figure 17 shows a second section view of figure 15, with the actuation device in the maximum actuating position.

### DETAILED DISCLOSURE OF THE INVENTION

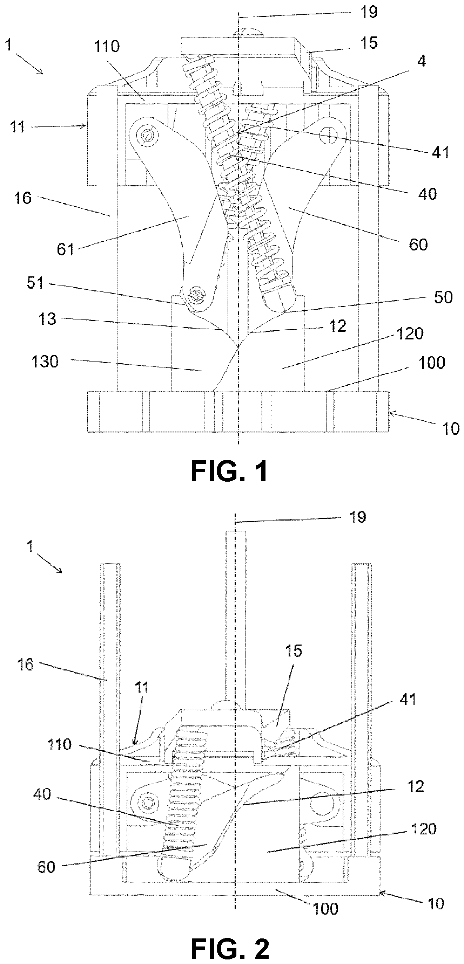

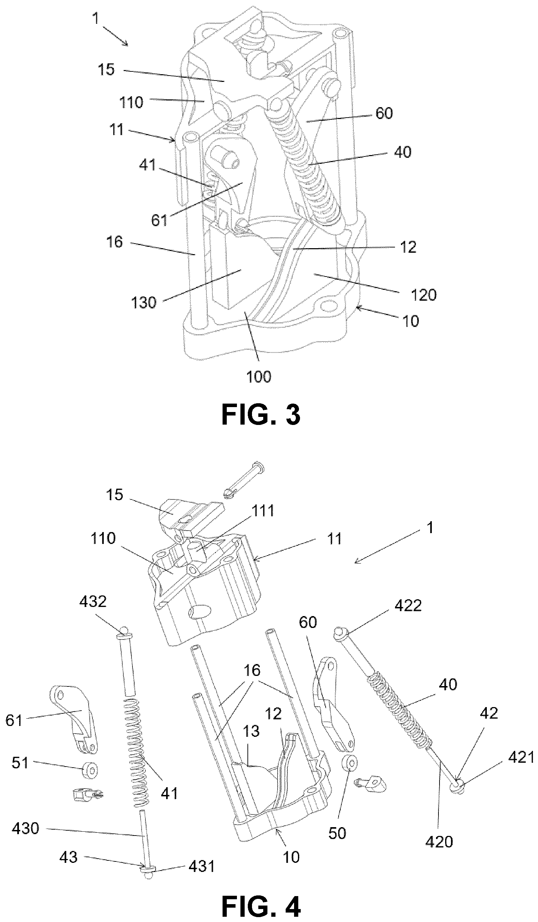

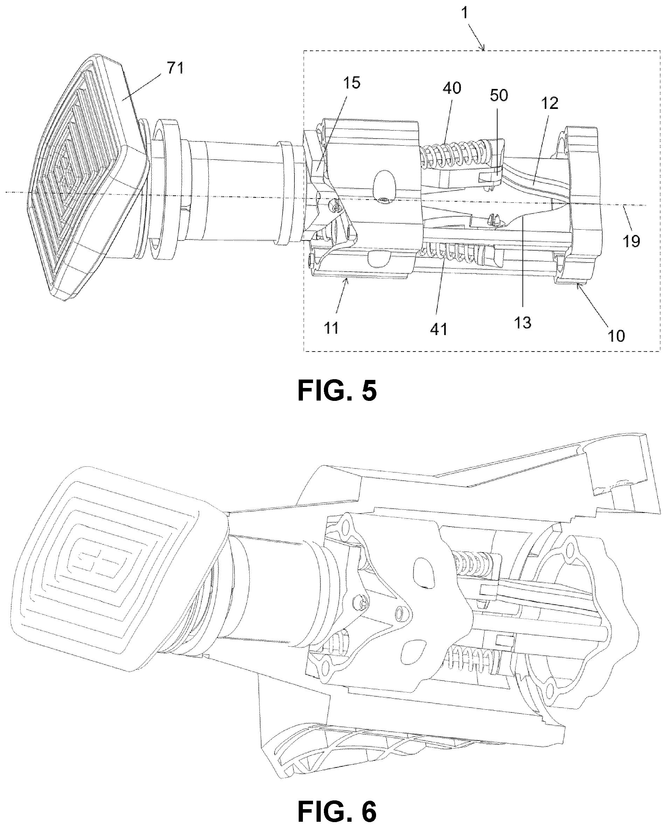

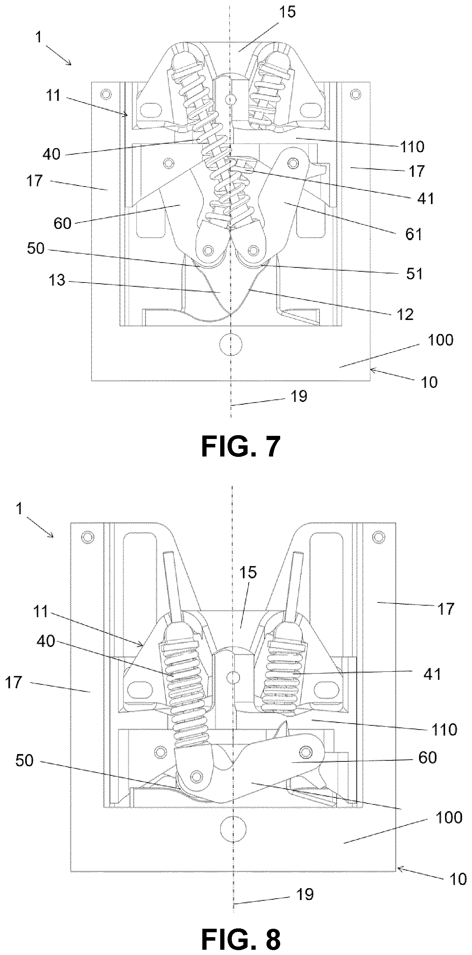

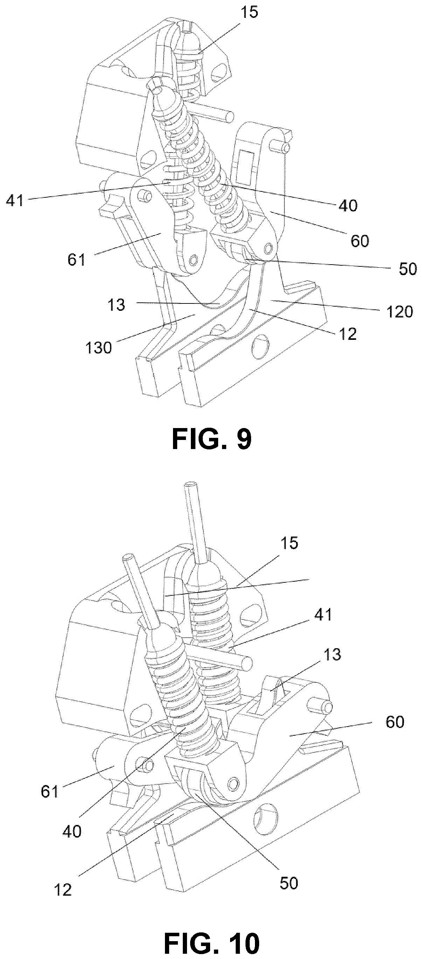

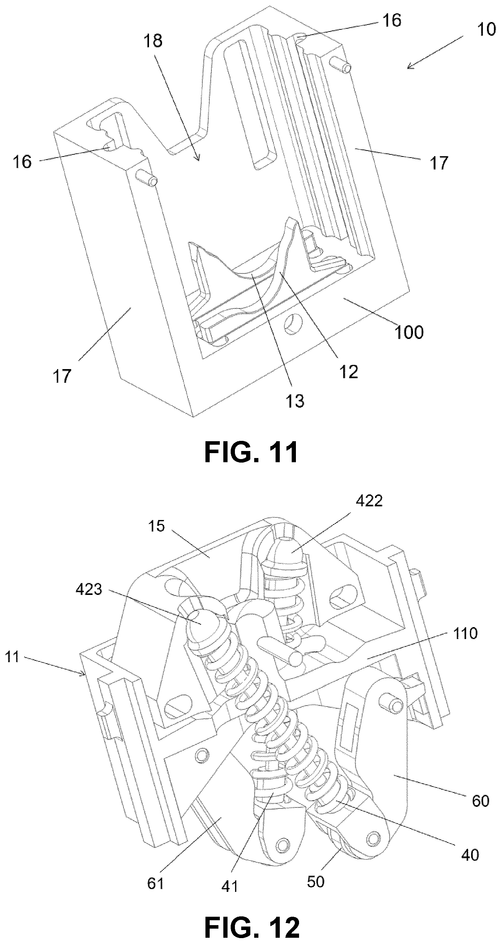

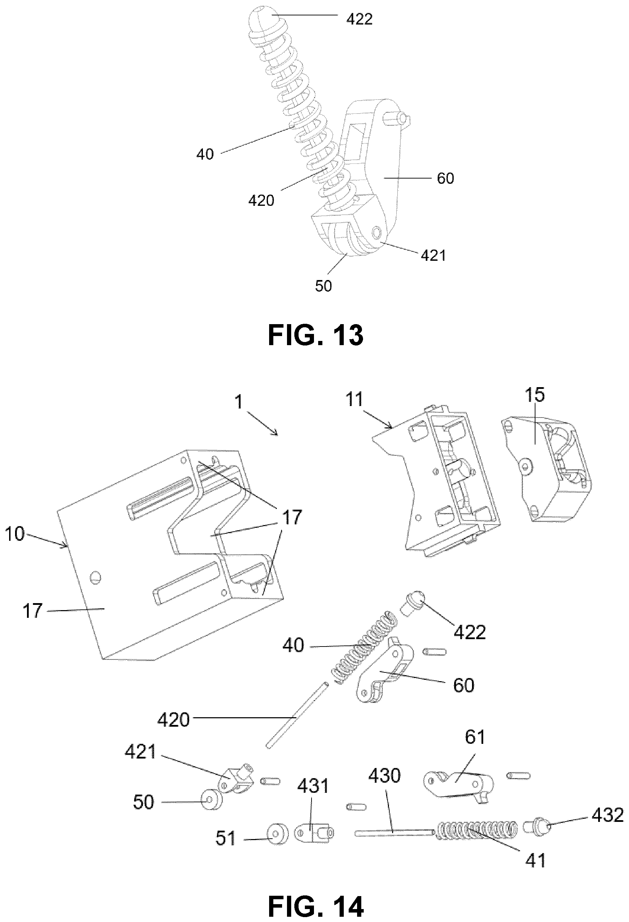

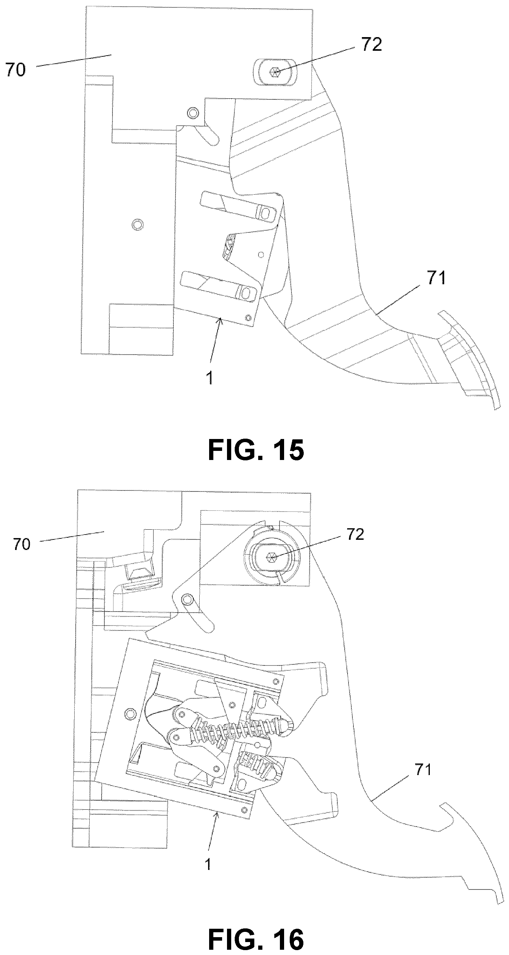

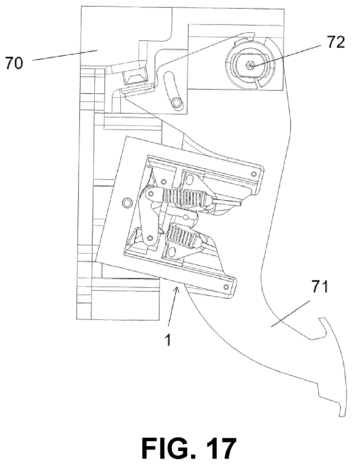

Figures 1 to 4 show a first embodiment of the invention, while figures 7 to 14 show a second embodiment of the invention. Figures 1 and 7 show the feel simulator module 1 in the rest position, i.e. when the driver does not act on the actuation device and therefore the actuation device is at rest, as shown in figures 6 and 16. Figures 2 and 8 show the feel simulator module 1 in the maximum actuating position, i.e. when the driver acts on the actuation device until the actuation device is moved to the maximum actuating position, as shown for example in figure 17.

The feel simulator module 1 of the invention is configured to be arranged between a fixed portion 70 of a vehicle and an actuation device 71 of said vehicle, said actuation device 71 being preferably operable by foot, said actuation device 71 being part of a push-button type pedal as shown in the first embodiment, part of a conventional pivoting pedal as shown in the second embodiment, or part of an organ type pedal (not shown in the figures). The fixed portion 70 of the vehicle may be a part of the vehicle chassis, or a main bracket which also forms part of the pedal mentioned above, said main bracket being fixed to the vehicle chassis.

Furthermore, preferably the actuation device and the feel simulator module form an electronic braking system, known as a 'brake by wire' device. In this type of 'brake by wire' device the driver does not act directly on the braking system, but the sensors of the 'brake by wire' device detect the position and/or the force with which the actuator is being actuated at any instant, and a control unit is responsible for interpreting the information from the sensors in order to act on the braking system. In conventional braking systems, the element on which the driver acts is mechanically connected to the hydraulic circuit of the braking system, the hydraulic circuit exerting a resistance to the driver's action on the conventional braking system. In order for the user to perceive a resistance to actuation similar to that obtained in conventional braking devices, it is known that "brake by wire" devices incorporate a feel simulator system, which makes it possible to adjust the force curve to be applied by the user throughout the displacement of the pedal to predefined requirements.

The feel simulator module 1 of the invention comprises a fixed part 10 which is configured to be coupled to the fixed portion 70 of the vehicle, and a movable part 11 which is configured to be coupled to the actuation device 71 of the vehicle. The fixed part 10 may be attached to the fixed portion 70 of the vehicle such that there is no relative movement between the fixed part 10 and the fixed portion 70 of the vehicle during the driver's actuation of the actuation device 1. Alternatively, the fixed part 10 may be coupled to the fixed portion 70 of the vehicle such that the fixed part 10 may pivot relative to the fixed portion 71 of the vehicle during the driver's actuation of the actuation device 1.

The movable part 11 is arranged opposite and displaceably coupled to the fixed part 10, so that the movable part 11 moves relative to the fixed part 10 when a driver actuates the actuation device 71 of the vehicle. Preferably the movable part 11 is displaced relative to the fixed part 10 about a longitudinal displacement axis 19. Preferably the fixed part 10 comprises a base 100 configured to be coupled to the fixed portion 70 of the vehicle, and the movable part 11 comprises a base 110 configured to couple to the actuation device 71, said bases 100, 110 being arranged opposite each other.

The feel simulator module 1 also comprises elastic means 4 arranged between the fixed part 10 and the movable part 11. When the driver acts on the actuation device 71 of the vehicle, the elastic means 4 are deformed, generating a counterforce on the movable part 11 which opposes this displacement. That is to say, the displacement of the movable part 11 with respect to the fixed part 10 deforms the elastic means 4, so that the elastic means 4 generate a counterforce on the movable part 11, this counterforce being the one perceived by the driver when acting on the actuation device 71 of the vehicle.

In addition, the feel simulator module 1 comprises contact means coupled to the elastic means 4. The contact means move over at least one contact surface 12, 13 actuated by the elastic means 4 when the movable part 11 moves, such that the counterforce exerted by the elastic means 4 on the movable part 11 changes depending on the profile of the contact surface 12, 13. Preferably each contact surface 12, 13 is a path comprising a profile of varying slope. The design of this profile, i.e. the choice of the different slopes, makes it possible to establish point by point the counterforce exerted by the elastic means 4 on the movable part 11 when the driver acts on the actuation device 71 from the rest position to the maximum actuation position.

One of the parts 10, 11 of the feel simulator module 1, i.e. either the fixed part 10 or the movable part 11, comprises said at least one contact surface 12, 13, the elastic means 4 being supported on the other of said parts 10, 11.

Thus, the feel simulator module 1 forms a unit comprising the elements necessary to provide a vehicle actuation device 71 with a feel simulator.

The fact that the feel simulator module 1 includes all the elements necessary for its operation allows it to be easily coupled to different types of actuation devices 71 by simply modifying the way in which the fixed part 10 is coupled to the fixed portion 70 of the vehicle and the movable part 11 to the actuation device 71 of the vehicle, but the same configuration of the rest of the components of the feel simulator module 1 can be used. Thus, the same feel simulator module 1 can be easily adapted for coupling to a push-button type pedal as well as to a conventional pivoting pedal or an organ type pedal.

Furthermore, the feel simulator module 1 of the invention also facilitates the assembly process as the various components of the module can be assembled separately from the actuation device, and subsequently attached to the actuation device and the fixed portion of the vehicle.

Preferably one of the parts 10, 11 of the feel simulator module 1, i.e. either the fixed part 10 or the movable part 11, comprises a plurality of side walls 17 extending perpendicularly from its base 100, 110, the base 100, 110 and the side walls 17 defining a housing 18 in which the contact means and at least part of the elastic means 4 are housed, and the base 100, 110 of the other part 10, 11 preferably being arranged as a lid. This configuration of the feel simulator module 1 as a box means that the various components arranged inside said housing 18 are protected from the weather, dirt, etc. In addition, the box-like configuration of the feel simulator module 1 also allows to dampen the noises produced by the components contained inside the housing due to spring reverberation, friction, etc.

Preferably the elastic means 4 comprise at least one spring 40, 41, the contact means comprising a contact element 50, 51 for each spring 40, 41 and the fixed part 10 a contact surface 30, 31 for each spring 40, 41. Each contact element 50, 51 is arranged at a first end of the associated spring 40, 41, each contact element 50, 51 being movably supported on the corresponding contact surface 12, 13. A second end of each spring 40, 41 is disposed supported on the movable part 11. Preferably the contact element 50, 51 associated with each spring 40, 41 is a wheel, although alternatively said contact element may be any other type of rolling element or sliding element. Preferably said at least one spring 40, 41 comprises a helical spring or a torsion spring.

Preferably the elastic means 4 comprise a first spring 40 and a second spring 41 arranged in parallel. More preferably the second spring 41 and the contact surface 31 corresponding to said second spring 41 are arranged rotated 180° with respect to the first spring 40 and the contact surface 30 corresponding to said first spring 40, i.e. they are arranged in such a way that there is a tilting symmetry of the assembly formed by the second spring 41 and the second contact surface 31 with respect to the assembly formed by the first spring 40 and the second contact surface 30. In this way the perpendicular reaction force generated on the contact element 50 associated with the first spring 40 and the perpendicular reaction force generated on the contact element 51 associated with the second spring 41 compensate each other, so that the forces which are not applied directly against the actuation device 71 of the vehicle compensate each other, thus considerably reducing the friction in the coupling between the fixed part 10 and the movable part 11, and therefore the hysteresis.

Preferably, when the at least one spring comprises a helical spring, the actuation device 1 comprises a connecting rod 60, 61 for each spring 40, 41, a first end of each connecting rod 60, 61 being pivotably coupled to the part 10, 11 of the feel simulator module 1 not comprising the at least one contact surface 12, 13, and a second end of each connecting rod 60, 61 being coupled to the first end of the corresponding spring 40, 41. The connecting rod 60, 61 makes it possible to transform the longitudinal displacement movement of the movable part 11 into a sliding movement of the contact element on the corresponding contact surface. In the case where the at least one spring comprises a torsion spring, the end of the spring on which the contact element is arranged serves as the connecting rod.

Preferably the part 10, 11 of the feel simulator 1 which does not comprise the at least one contact surface 12, 13, comprises a rocker 15 pivotably coupled to the base 100, 110 of said part 10, 11, the second end of the first and second springs 40, 41 being supported on the rocker 15, a malfunction of the first spring 40 or the second spring 41 being detected when the rocker 15 has an inclination different from a predetermined reference inclination. By including a rocker 15 on which the first spring 40 and the second spring 41 act, so that the inclination of the rocker 15 reflects whether or not the springs are functioning properly, it is possible to detect a failure in the elastic means 4 using a pair of linear sensors or an angular sensor that measures the inclination of the rocker 15, so that a failure of the elastic means 4 can be detected without the use of a force sensor, thus providing a cost-effective solution, since the technology of force sensors is still under development and sensors are more expensive than angular or linear sensors.

As discussed above, figures 1 to 4 show a first embodiment of the feel simulator module 1 according to the invention.

The feel simulator module 1 of the first embodiment comprises a fixed part 10 which is configured to be coupled to the vehicle, and a movable part 11 which is movably coupled to the fixed part 10. The movable part 11 is arranged opposite the fixed part 10, the movable part 11 being displaced relative to the fixed part 10 on a longitudinal displacement axis 19 when the driver acts on the feel simulator module 1.

In this first embodiment the fixed part 10 comprises a base 100 configured to be coupled to the fixed portion 70 of the vehicle and the movable part 11 comprises a base 110 configured to be coupled to the actuation device 71, said bases 100, 110 being arranged opposite each other.

Furthermore, in this first embodiment, the fixed part 10 comprises a first contact surface 12 and a second contact surface 13. The fixed part 10 comprises a first vertical extension 120 extending perpendicularly from its base 100, the first contact surface 12 being arranged on said first vertical extension 120, the first contact surface 12 being a path which is arranged opposite the base 110 of the movable part 10, said path comprising a variable slope profile. The fixed part 10 comprises a second vertical extension 130 extending perpendicularly from its base 100, the second contact surface 13 being arranged on said second vertical extension 130, the second contact surface 13 being a path which is arranged opposite the base 110 of the movable part 10, said path comprising a variable slope profile.

In this first embodiment, the feel simulator module 1 also comprises elastic means 4 arranged between the fixed part 10 and the movable part 11, and contact means coupled to the elastic means 4. When the driver acts on the actuation device 71, the actuation device 71 displaces the movable part 11, deforming the elastic means 4 and displacing the contact means on the contact surfaces 12, 13 of the fixed part 10 actuated by the elastic means 4.

In this first embodiment, the elastic means 4 comprise a first spring 40 and a second spring 41 arranged in parallel, the contact means comprising a first contact element 50 arranged at a first end of the first spring 40, and a second contact element 51 arranged at a first end of the second spring 41. The first contact element 50 is arranged slidably supported on the first contact surface 12, while the second contact element 51 is arranged slidably supported on the second contact surface 13. A second end of each spring 40, 41 is arranged supported on the movable part 11. The first spring 40 comprises a helical spring, while the second spring 41 comprises a helical spring.

In this first embodiment, the second spring 41 and the second contact surface 13 are arranged rotated 180° with respect to the first spring 40 and the second contact surface 12.

In this first embodiment, the contact elements 50, 51 are wheels.

In this first embodiment, the feel simulator module 1 comprises a first connecting rod 60 associated with the first spring 40, and a second connecting rod 61 associated with the second spring 41. A first end of each connecting rod 60, 61 is disposed pivotably coupled to the movable part 11 and a second end of each connecting rod 60, 61 is disposed coupled to the first end of the corresponding spring 40, 41.

In this first embodiment, the first spring 40 comprises a first support 42 comprising a central part 420, a first stop element 421 and a second stop element 422. The central part 420 of the first support 42 passes through the helical spring of the first spring 40, a first end of the first spring 40 being coupled to the first stop element 421 and the second stop element 422 being coupled to the second end of the helical spring. The second stop element 422 is arranged supported on the movable part 11 so that when the movable part 11 is displaced, the second stop element 422 is displaced relative to the first stop element 421, thus compressing the first spring 40. The first contact element 50 and the second end of the first connecting rod 60 are arranged coupled to the first stop element 421 of the first support 42.

In this first embodiment, the second spring 41 comprises a second support 43. The characteristics and arrangement of the second support 43 are analogous to those of the first support 42 and therefore need not be described again.

In this first embodiment, the movable part 11 comprises a rocker 15 pivotably coupled to its base 110. Thus, the base 110 of the movable part 11 is configured to couple to the actuation device 71 of the vehicle, while the first spring 40 and the second spring 41 are supported on the rocker 15.

In this first embodiment, the fixed part 10 comprises guiding means 16, the movable part 11 being movably coupled to the fixed part 10 by means of said guiding means 16. The guiding means 16 extend vertically from the base 100 of the fixed part 10.

Figure 6 shows the feel simulator module of the first embodiment coupled to a push-button type pedal of a vehicle (not shown in the figures). Said pedal comprises an actuation device 71 and a main support 70 configured to be fixed to the vehicle chassis, so that said main support 70 forms a fixed portion of the vehicle. Thus, the fixed part 10 is fixed to the main support 70 (not shown in the figure), while the actuation device 71 is supported on the movable part 11. The main support 70 comprises a guide housing 73 in which an actuation device 71 is slidably housed and a main housing 74 communicating with the guide housing 73 in which the feel simulator module 1 is arranged.

Figures 7 to 14 show a second embodiment of the feel simulator module 1 according to the invention.

The feel simulator module 1 of the second embodiment differs from the feel simulator module 1 of the first embodiment mainly in its box-like configuration. To this end, the fixed part 10 comprises a plurality of side walls 17 extending perpendicularly from each side of its base 100, the base 100 and the side walls 17 defining a housing 18 in which the contact means and at least part of the elastic means 4 are housed, the base 110 of the movable part 11 being arranged as a lid.

The remaining features are analogous to those of the first embodiment and therefore it is not considered necessary to describe them again.

Figures 15 to 17 show the feel simulator module of the second embodiment coupled to a conventional pedal of a vehicle (not shown in the figures). Said pedal comprises main support 70, said main support 70 being the fixed portion of the vehicle to which the fixed part 10 of the feel simulator module 1 is coupled. Said pedal also comprises an actuation device 71 which is an arm pivotably coupled to the main support 70, the actuation device 71 being able to pivot with respect to a pivot axis 72 between a rest position and a maximum actuation position when the driver acts on said actuation device 71. Thus, the fixed part 10 is pivotably coupled to the main support 70, while the actuation device 71 is pivotably coupled to the movable part of the feel simulator module 1.

A second aspect of the invention relates to a vehicle comprising an actuation device 71 and a feel simulator module 1 as described in the first aspect of the invention, the actuation device 71 and the feel simulator module 1 forming an electronic braking device also known as a "Brake by wire" device.

## Claims

1. Feel simulator module configured to be arranged between an actuation device (71) of a vehicle and a fixed portion (70) of said vehicle, the feel simulator module (1) comprising
- a fixed part (10) that is configured to be attached to the fixed portion (70) of the vehicle; and
- a movable part (11) which is configured to be coupled to the actuation device (71) of the vehicle, the movable part (11) being arranged opposite and movably coupled to the fixed part (10), the movable part (11) being displaced relative to the fixed part (10) when a driver actuates the actuation device (71) of the vehicle,
the feel simulator module (1) also comprising elastic means (4) arranged between the fixed part (10) and the movable part (11), the elastic means (4) being deformed when the driver acts on the actuation device (71) of the vehicle generating a counterforce on the movable part (11) which opposes this displacement, and contact means coupled to the elastic means (4), the contact means moving over at least one contact surface (12, 13) actuated by the elastic means (4) when the movable part (11) is displaced, so that the counterforce exerted by the elastic means (4) on the movable part (11) changes according to the profile of the contact surface (12, 13), wherein one of the parts (10, 11) comprises said at least one contact surface (12, 13), the elastic means (4) being supported on the other of said parts (10, 11).

2. Feel simulator module according to claim 1, wherein the displacement of the movable part (11) relative to the fixed part (10) when a driver acts on the actuation device (71) of the vehicle is performed on a longitudinal displacement axis (19).

3. Feel simulator module according to claim 1 or 2, wherein the fixed part (10) comprises a base (100) configured to be attached to the fixed portion (70) of the vehicle, and the movable part (11) comprises a base (110) configured to be attached to the actuation device (71), wherein said bases (100, 110) are arranged opposite each other.

4. Feel simulator module according to claim 3, wherein the part (10, 11) comprising the at least one contact surface (12, 13) comprises for each contact surface (12, 13) a vertical extension (120, 130) extending perpendicularly from the base (100, 110) of said part (10, 11), each contact surface (12, 13) being a path facing the base (100, 110) of the other part (10, 11), said path comprising a variable slope profile.

5. Feel simulator module according to claim 3 or 4, wherein one of the parts (10, 11) comprises guiding means (16) extending perpendicularly from its base (100, 110), the movable part (11) being movably coupled to the fixed part (10) by means of said guiding means (16).

6. Feel simulator module according to any of claims 3 to 5, wherein one of the parts (10, 11) comprises a plurality of side walls (17) extending perpendicularly from the base (100, 110), the base (100, 110) and the side walls (17) defining a housing (18) in which the contact means and at least part of the elastic means (4) are housed.

7. Feel simulator module according to any of claims 3 to 6, wherein the elastic means (4) comprise at least one spring (40, 41), said at least one spring preferably comprising a helical spring or a torsion spring, the feel simulator module (1) comprising a contact surface (12,13) for each spring (40, 41) and the contact means comprising one contact element (50, 51) for each spring (40, 41), each contact element (50, 51) being arranged at a first end of the associated spring (40, 41), each contact element (50, 51) being movably supported on the corresponding contact surface (12, 13).

8. Feel simulator module according to claim 6 or 7, wherein the elastic means (4) comprise a first spring (40) and a second spring (41) arranged in parallel.

9. Feel simulator module according to claim 8, wherein the second spring (41) and the contact surface (13) corresponding to said second spring (41) are arranged rotated 180° with respect to the first spring (40) and the contact surface (12) corresponding to said first spring (40), in such a way that the perpendicular reaction force generated on the contact element (50) associated with the first spring (40) and the perpendicular reaction force generated on the contact element (51) associated with the second spring (41) compensate each other.

10. Feel simulator module according to any of claims 7 to 9, comprising a connecting rod (60, 61) for each spring (40, 41), wherein a first end of each connecting rod (60, 61) is pivotably coupled to the movable part (11) when the at least one contact surface (12, 13) is arranged in the fixed part (10) and wherein said first end of each connecting rod (60, 61) is pivotably coupled to the fixed part (10) when the at least one contact surface (12, 13) is arranged in the movable part (11), and a second end of each connecting rod (60, 61) being coupled to the first end of the corresponding spring (40, 41).

11. Feel simulator module according to one of claims 8 to 10, wherein the part (10, 11) not comprising said at least one contact surface (12, 13) comprises a rocker (15) pivotably coupled to the base (100, 110) of said part (10, 11), the second ends of the first and second springs (40, 41) being supported on the rocker (15), an incorrect operation of the first spring (40) or the second spring (41) being detected when the rocker (21) has an inclination different from a predetermined reference inclination.

12. Feel simulator module according to any of the preceding claims, wherein the fixed part (10) is the part comprising the at least one contact surface (12, 13).

13. Vehicle comprising an actuation device (71) and a feel simulator module (1) according to any of the preceding claims, wherein the actuation device (71) and the feel simulator module (1) form an electronic braking device.

14. Vehicle according to claim 13, comprising a main support (70), wherein said main support (70) is the fixed portion of the vehicle to which the fixed part (10) of the feel simulator module (1) is attached, the actuation device (71) being an arm pivotably attached to the main support (70), the actuation device (71) being capable of pivoting about a pivot axis (72) between a rest position and a maximum actuating position when the driver actuates the actuation device (71), the fixed part (10) being pivotably coupled to the main support (70).

15. Vehicle according to claim 13, comprising a main support (70), the main support (70) being the fixed portion of the vehicle to which the fixed portion (10) of the feel simulator module (1) is attached, the main support (70) comprising a guide housing (73) in which the actuation device (71) is housed and a main housing (74) connected to the guide housing (73) in which the feel simulator module (1) is arranged.
